Europäisches Patentamt

European Patent Office

Office européen des brevets

(11) Veröffentlichungsnummer: **0 038 408**
**B1**

# EUROPÄISCHE PATENTSCHRIFT

(45) Veröffentlichungstag der Patentschrift:
10.10.84

(21) Anmeldenummer: 81101216.0

(22) Anmeldetag: 20.02.81

(51) Int. Cl.³: **B 29 J 5/00,** C 08 L 97/02,
C 09 J 3/16

(54) Verfahren zur Herstellung von Holzwerkstoffen mit geringer Formaldehydabspaltung.

(30) Priorität: 10.03.80 DD 219551
22.01.81 DD 227123

(43) Veröffentlichungstag der Anmeldung:
28.10.81 Patentblatt 81/43

(45) Bekanntmachung des Hinweises auf die Patenterteilung:
10.10.84 Patentblatt 84/41

(84) Benannte Vertragsstaaten:
BE FR IT SE

(56) Entgegenhaltungen:
CH - A - 188 327
DE - A - 1 653 167

(73) Patentinhaber: VEB Leuna-Werke "Walter Ulbricht",
DDR-4220 Leuna 3 (DD)

(72) Erfinder: Barse, Joachim, Block 467/3,
DDR-4090 Halle-Neustadt (DD)
Erfinder: Kirchhof, Christa, Karl-Marx-Platz 12,
DDR-4203 Bad Dürrenberg (DD)
Erfinder: Lichtenfeld, Klaus, Dipl.-Chem., Uferstrasse 11,
DDR-4220 Leuna (DD)
Erfinder: Rössing, Peter, Feldstrasse 5,
DDR-3101 Hohendodeleben (DD)
Erfinder: Stürmer, Klaus-Dieter, Dipl.-Chem.,
Goetheweg 1, DDR-4203 Bad Dürrenberg (DD)
Erfinder: Simon, Peter, Fröbelstrasse 1,
DDR-4851 Langendorf (DD)

(74) Vertreter: Puchberger, Rolf, Dipl. Ing. et al,
Patentanwälte Dipl. Ing. Rolf Puchberger Dipl. Ing. Georg
Puchberger Singerstrasse 13, A-1010 Wien (AT)

**0 038 408**

## Beschreibung

Die Erfindung betrifft ein Verfahren zur Herstellung von Holzwerkstoffen, insbesondere von Span- oder Verbundplatten, mit geringer Formaldehydabspaltung unter Verwendung von Harnstoff-Formaldehyd-Harzen als Bindemittel und einer Harnstoff enthaltenden Mischung als Formaldehyd reduzierende Komponente, die gegebenenfalls unter Verwendung von Harnstoff-Formaldehyd-Leimen furniert werden.

In der Welt wird der größte Teil der produzierten Holzwerkstoffe als Verbundplatten oder aus Holzspänen oder verholzten pflanzlichen Fasern als Spanplatten unter Verwendung von Harnstoff-Formaldehyd-Harzen als Bindemittel hergestellt. Diese Harze bieten sich auf Grund ihrer chemischen, physikalischen und anwendungstechnischen Eigenschaften sowie der einfachen Fabrikation aus relativ billigen Rohstoffen für diesen Zweck besonders an.

Die mit Harnstoff-Formaldehyd-Harzen hergestellten Platten werden zum größten Teil in der Möbelindustrie und für den Innenausbau verwendet, wobei sie teilweise unter Verwendung von Harnstoff-Formaldehyd-Leimen eine Oberflächenbeschichtung mit Furnier erhalten.

In neuerer Zeit werden an Holzwerkstoffe besondere Anforderungen auf Grund der steigenden Umweltschutzforderungen gestellt. Bedingt durch die nicht vollständig verlaufende Reaktion zwischen Harnstoff und Formaldehyd bei der Herstellung und Oberflächenbeschichtung der Platten wird nach beendetem Preßvorgang ständig eine geringe Menge Formaldehyd abgespalten, die bei besonders empfindlichen Personen und bei nicht fachgerechter Handhabung der Platten zur Belästigung und zum Teil zur Schädigung des menschlichen Organismus führen kann.

Die Zulassung von Holzwerkstoffen, besonders für den Innenausbau, wird in zunehmendem Maße von der Formaldehydabspaltung abhängig gemacht. Die unterschiedlich scharfe Normung von Emissionsgrenzen in einzelnen Ländern zwingt die Plattenproduzenten dazu, sich auf diese Forderungen einzustellen und laufend die kommerziellen Leimtypen durch Änderung der Molverhältnisse der Ausgangskomponenten und durch Zusatz von Formaldehydakzeptoren zu modifizieren.

Erhalten Spanplatten eine Oberflächenbeschichtung (z. B. in der Möbelindustrie mit Furnier), so werden sie mit einem Harnstoff-Formaldehyd-Leim bestrichen und das Furnier unter Druck und Temperatur aufgepreßt. Die verwendeten Harnstoff-Formaldehyd-Leime haben meist gegenüber den verwendeten Leimen für die Spanplattenherstellung einen wesentlich höheren Formaldehydgehalt.

Zur Senkung der Formaldehydabspaltung während des Aushärtungsprozesses und aus den fertigen Platten sind zahlreiche Produkte und Verfahren bekannt, wie die Verwendung eines Naturharzes (Quebracho), modifizierter Sulfitablauge oder Harnstoff sowie Gemische aus Harnstoff und Styrolbutylacrylat. Diese Produkte und Verfahren haben den Nachteil, daß bestimmte physikalische Eigenschaften der Platten negativ beeinträchtigt werden, z. B. Sinken der Festigkeitswerte (Biegefestigkeit und Querzugfestigkeit), Zunahme der Dickenquellung und Wasseraufnahme.

Zur Absenkung der Formaldehyd-Abspaltung hat insbesondere der Zusatz von Harnstoff technisches Interesse gefunden (DE-B-2 740 207), wobei der Zusatz als technisch schwer handhabbare Dispersion erfolgt.

Ziel der Erfindung ist es, ein Verfahren zur Herstellung von Holzwerkstoffen unter Verwendung von Harnstoff-Formaldehyd-Leim zu entwickeln, das es in einfacher und wirtschaftlicher Weise gestattet, unter Verwendung der üblichen Herstellungsanlagen, Bindemittel und Zusätze Platten herzustellen, die die bisher üblichen physikalischen Festigkeitswerte beibehalten und während des Herstellungsprozesses sowie danach eine geringe Formaldehydabspaltung aufweist.

Diese Aufgabe wird dadurch gelöst, daß bei der Herstellung von Holzwerkstoffen unter Verwendung von Harnstoff-Formaldehyd-Leimen als formaldehydreduzierende Komponente erfindungsgemäß eine Mischung aus 0,5 bis 1,5 Gew.-Teilen Harnstoff, 0,5 bis 1,5 Gew.-Teilen Melamin und 1 bis 2 Gew.-Teilen Ammoniumsulfat, bezogen auf 100 Teile Leim, zugegeben wird.

Aufgrund der bisher bekannten Ergebnisse war zu befürchten, daß durch den Zusatz von Harnstoff ein Festigkeitsabfall der gefertigten Platten eintritt. Überraschenderweise ist dies jedoch bei der Verwendung des Gemisches aus Harnstoff, Melamin und Ammonsulfat nicht der Fall.

### Beispiel 1

100 Gew.-Teile Flachspäne aus Kiefernholz von 0,3 bis 0,4 mm Dicke, 3,0 bis 5 mm Breite und 20 bis 30 mm Länge wurden in eine Mischtrommel gebracht und durch Bedüsen mit 14,26 Gew.-Teilen einer Leimflotte beharzt.

Die Leimflotte bestand aus:

| | |
|---|---|
| 100 Gew.-Teilen | eines Spanplattenleimes auf der Basis Harnstoff-Formaldehyd mit einem Festharzgehalt von 68% |
| 5 Gew.-Teilen | Wasser |
| 6 Gew.-Teilen | einer 40%igen Paraffin-Emulsion |
| 4 Gew.-Teilen | einer 40%igen wäßrigen Härterlösung, bestehend aus einem Gemisch von: |

2

**0 038 408**

25 Gew.-Teilen Ammoniumchlorid,
20 Gew.-Teilen Hexamethylentetramin und
55 Gew.-Teilen Harnstoff

1,14 Gew.-Teilen   Harnstoff
1,14 Gew.-Teilen   Melamin und
1,71 Gew.-Teilen   Ammoniumsulfat.

In einem Schüttkasten mit der Abmessung 750 × 300 mm wurden 2,9 kg der behandelten Späne gleichmäßig verteilt. Dieser Spankuchen wurde in einer hydraulischen Heizplattenpresse mit einem Preßdruck von 1,5 MPa senkrecht zur Plattenebene auf eine Dicke von 20 mm zusammengedrückt. Der Preßdruck wurde 7 min aufrechterhalten, die Temperatur der Preßplatten betrug dabei 423 K.
Die erhaltene Spanplatte hatte folgende physikalische Kenndaten:

| | |
|---|---|
| Dichte | 604 kg/m$^3$ |
| Biegefestigkeit | 23,9 da N/cm$^2$ |
| Abhebefestigkeit | 0,60 da N/cm$^2$ |
| Quellung 2 h | 5,05% |
| Perforatorwert | 0,010% |

Nach der beschriebenen Verfahrensweise wurde eine zweite Spanplatte hergestellt, ohne jedoch den Zusatz

1,14 Gew.-Teile Harnstoff
1,14 Gew.-Teile Melamin und
1,71 Gew.-Teile Ammoniumsulfat

der Leim-Härter-Mischung zuzugeben.
Die erhaltene Spanplatte hatte folgende physikalische Kenndaten:

| | |
|---|---|
| Dichte | 610 kg/m$^3$ |
| Biegefestigkeit | 24,5 da N/cm$^2$ |
| Abhebefestigkeit | 0,58 da N/cm$^2$ |
| Quellung 2 h | 5,32% |
| Perforatorwert | 0,020% |

Die angegebenen physikalischen Kennwerte der beiden Platten sind gleich. Sie differieren nur innerhalb des Meßfehlerbereiches der Prüfmethode. Die Formaldehydabspaltung aus der fertigen Spanplatte wurde um 50% gesenkt.
Die Prüfung der physikalischen Kenndaten erfolgte nach folgenden Standards:

Dichte nach TGL 11 369
Biegefestigkeit nach TGL 11 371
Abhebefestigkeit nach TGL 8767
Dickenquellung nach TGL 11 370
Perforatorwert nach EN 120, Entwurf des CEN/TK 91

Beispiel 2

100 Gew.-Teile Flachspäne aus Kiefernholz von 0,3 bis 0,4 mm Dicke, 3,0 bis 5 mm Breite und 20 bis 30 mm Länge wurden in eine Mischtrommel gebracht und durch Bedüsen mit 13,70 Gew.-Teilen einer Leimflotte beharzt.
Die Leimflotte bestand aus:

| | |
|---|---|
| 100 Gew.-Teilen | eines Spanplattenleimes auf der Basis Harnstoff-Formaldehyd mit einem Festharzgehalt von 67% |
| 6 Gew.-Teilen | einer 40%igen Paraffin-Emulsion |
| 6 Gew.-Teilen | einer 20%igen Ammoniumchloridlösung |
| 0,5 Gew.-Teilen | Harnstoff |
| 1,5 Gew.-Teilen | Melamin und |
| 1,5 Gew.-Teilen | Ammoniumsulfat. |

In einem Schüttkasten mit den Abmessungen 750 × 300 mm wurden 2,9 kg der behandelten Späne gleichmäßig verteilt. Dieser Spankuchen wurde in einer hydraulischen Heizplattenpresse mit einem

3

Preßdruck von 1,5 MPa senkrecht zur Plattenebene auf eine Dicke von 20 mm zusammengedrückt. Der Preßdruck wurde 7 min aufrechterhalten, die Temperatur der Preßplatten betrug dabei 438 K.

Die erhaltene Spanplatte hatte folgende physikalische Kenndaten:

| | |
|---|---|
| Dichte | 602 kg/m$^3$ |
| Biegefestigkeit | 21,9 da N/cm$^2$ |
| Abhebefestigkeit | 0,519 da N/cm$^2$ |
| Quellung 2 h | 5,07% |
| Perforatorwert | 0,010% |

Nach der beschriebenen Verfahrensweise wurde eine zweite Spanplatte hergestellt, ohne jedoch den Zusatz von

0,5 Gew.-Teilen Harnstoff
1,5 Gew.-Teilen Melamin und
1,5 Gew.-Teilen Ammoniumsulfat

der Leim-Härter-Mischung zuzugeben.

Die erhaltene Spanplatte hatte folgende physikalische Kenndaten:

| | |
|---|---|
| Dichte | 600 kg/m$^3$ |
| Biegefestigkeit | 21,1 da N/cm$^2$ |
| Abhebefestigkeit | 0,519 da N/cm$^2$ |
| Quellung 2 h | 5,05% |
| Perforatorwert | 0,020% |

Die angegebenen physikalischen Kennwerte der beiden Platten sind gleich. Sie differieren nur innerhalb des Meßfehlerbereiches der Prüfmethode. Die Formaldehydabspaltung aus der fertigen Spanplatte wurde um 50% gesenkt.

Während des Preßvorganges wurde die Formaldehydabspaltung ca. 1 m von der Presse entfernt mit dem Dräger-Gasspürgerät und dem Dräger-Prüfröhrchen Formaldehyd 0,5/a bestimmt, und es wurden folgende Werte ermittelt:

0,5 ppm mit dem Zusatz von

0,5 Harnstoff
1,5 Melamin und
1,5 Ammoniumsulfat

1,0 ppm ohne den Zusatz von

0,5 Harnstoff
1,5 Melamin und
1,5 Ammoniumsulfat.

Die Formaldehydabspaltung mit dem beschriebenen Zusatz ist während des Preßvorganges 50% geringer.

## Beispiel 3

Eine Spanplatte mit einer Formaldehydabspaltung von 0,025%, gemessen nach der FESYP-Perforatormethode, wird mit einem Harnstoff-Formaldehyd-Leim-Härtergemisch beleimt und mit einem Furnier beschichtet.

| | |
|---|---|
| Probengröße: | 400 mm × 50 mm |
| Art der Beschichtung: | allseitig |
| Beschichtungsmaterial: | Eiche-Furnier, 0,7 mm Dicke |
| Leimauftrag: | 150 g/m$^2$ |
| Preßtemperatur: | 413 K |
| Preßdruck: | 6 MPa |
| Preßzeit: | 30 sec. |

Leimflotten:

1.  100 Gew.-Teile    HF-Leim, Molverhältnis 1 : 1,8, Festharzanteil 68%
    — Gew.-Teile    Formaldehydreduzierungsmittel
    15 Gew.-Teile    Roggenmehl
    10 Gew.-Teile    15%ige Ammonchloridlösung
2.  100 Gew.-Teile    HF-Leim, Molverhältnis 1 : 1,8, Festharzanteil 68%
    4 Gew.-Teile    Formaldehydreduzierungsmittel
    15 Gew.-Teile    Roggenmehl
    10 Gew.-Teile    15%ige Ammonchloridlösung

Zusammensetzung des Formaldehydreduzierungsmittels

    100 Gew.-Teile    Melamin
    100 Gew.-Teile    Harnstoff
    150 Gew.-Teile    Ammonsulfat.

### Formaldehydabspaltung der beschichteten Platte

Die Bestimmung der Formaldehydabspaltung wurde nach der FESYP-Gasanalysenmethode durchgeführt.

Zusammenstellung der Meßergebnisse:

| Leimflotte | Gasanalysenwert, mg/h m² | Reduzierung in %, um |
|---|---|---|
| 1 (0-Wert) | 39,7 | — |
| 2 | 25,7 | 35 |

### Beispiel 4

Es wird eine 5lagige Sperrholzplatte hergestellt. Als Bindemittel wird eine Harnstoff-Formaldehyd-Leim-Härter-Mischung verwendet.

Technische Daten der Plattenherstellung.

    Plattengröße:       300 mm × 300 mm
    Plattenaufbau:      5 Lagen, Kreuz
    Holzart:            Buche
    Holzdicke:          1,8 mm
    Holzfeuchtigkeit:   9%
    Leimauftrag:        180 g/m²
    Preßtemperatur:     373 K
    Preßdruck:          20 MPa
    Preßzeit:           5 min

Leimflotten

1.  100 Gew.-Teile    HF-Leim, Molverhältnis 1 : 1,8, Festharzanteil 68%
    — Gew.-Teile    Formaldehydreduzierungsmittel
    4 Gew.-Teile    Härterlösung,
2.  100 Gew.-Teile    HF-Leim, Molverhältnis 1 : 1,8, Festharzanteil 68%
    4 Gew.-Teile    Formaldehydreduzierungsmittel
    4 Gew.-Teile    Härterlösung

Zusammensetzung des Formaldehydreduzierungsmittels:

    100 Gew.-Teile    Melamin
    100 Gew.-Teile    Harnstoff
    150 Gew.-Teile    Ammonsulfat.

Zusammensetzung der Härterlösung:

| | |
|---|---|
| 25 Gew.-Teile | Ammonchlorid |
| 55 Gew.-Teile | Harnstoff |
| 20 Gew.-Teile | Hexamin |
| 150 Gew.-Teile | Wasser |

Formaldehydabspaltung während des Preßvorgangs

Die 5lagige Sperrholzplatte wurde in einen Preßrahmen gelegt, durch den während des Preßvorganges keine Dämpfe in die Raumluft entweichen können.

An 4 Ansaugstellen wurden die entstehenden Formaldehyddämpfe abgesaugt und über Waschflaschen geleitet.

Die titrimetrisch ermittelte Formaldehydmenge bezieht sich auf eine Sperrholzplatte von 300 mm × 300 mm mit 4 Leimfugen. Die verwendete Leimflottenmenge beträgt 65 g.

| Leimflotte | Abgespaltene Formaldehydmenge in g/Platte | Reduzierung in % um |
|---|---|---|
| 1 | 0.174 | — |
| 2 | 0,085 | 51 |

**Patentanspruch**

Verfahren zur Herstellung von Holzwerkstoffen mit geringer Formaldehydabspaltung, insbesondere von Verbundplatten oder Spanplatten, die furniert sein können, unter Verwendung von Harnstoff-Formaldehyd-Leim als Bindemittel und einer Harnstoff enthaltenden Mischung als Formaldehyd reduzierende Komponente, dadurch gekennzeichnet, daß dem Bindemittel als Formaldehyd reduzierende Komponente eine Mischung aus 0,5 bis 1,5 Gew.-Teilen Harnstoff, 0,5 bis 1,5 Gew.-Teilen Melamin und 1 bis 2 Gew.-Teilen Ammoniumsulfat, bezogen auf 100 Gew.-Teile Bindemittel, zugegeben wird.

**Claim**

Process for the manufacture of wood material having a low separation of formaldehyde, especially of composite boards or pressboards, which might be veneered, utilizing urea-formaldehyde based adhesives as a binder and a mixture containing urea as formaldehyde reducing component, characterized in that a mixture of 0,5 to 1,5 weight parts urea, 0,5 to 1,5 weight parts melamine and 1 to 2 weight parts ammoniumsulfate, related to 100 weight parts binder, are added to the binder as formaldehyde reducing component.

**Revendication**

Procédé de fabrication de matériaux dérivés du bois avec dissociation minime du formaldéhyde, en particulier de panneaux légers ou plaques de fixation qui peuvent être plaquées, en utilisant une colle de formaldéhyde-urée comme adhésif et un mélange contenant de l'urée en tant que composant réduisant le formaldéhyde caractérisé en ce qu'à l'adhésif est ajouté, en tant que composant réduisant le formaldéhyde, un mélange de 0,5 à 1,5 parties en poids d'urée, de 0,5 à 1,5 parties en poids de mélamine et de 1 à 2 parties en poids de sulfate d'ammonium, en se rapportant à 100 parties en poids de l'adhésif.